# EUROPÄISCHE PATENTSCHRIFT

(11) **EP 1 039 357 B1**
(45) Veröffentlichungstag und Bekanntmachung des Hinweises auf die Patenterteilung: **08.10.2003**
(21) Anmeldenummer: 00105473.3
(22) Anmeldetag: 15.03.2000
(51) Int. Cl.: G05B 19/042, H03K 19/173

(54) **Einrichtung zum Einstellen von Betriebsgrössen in mehreren programmierbaren integrierten Schaltungen**
Device for adjusting operating parameters in multiple programmable integrated circuits
Dispositif d'ajustage des paramètres opératoires pour plusieurs circuits intégrés programmables

(30) Priorität: 19.03.1999 DE 19912446
(43) Veröffentlichungstag der Anmeldung: 27.09.2000
(73) Patentinhaber: Micronas GmbH, 79108 Freiburg (DE)
(72) Erfinder: Fink, Hans-Jörg, 79108 Freiburg (DE)
(74) Vertreter: Schaumburg, Thoenes & Thurn

(56) Entgegenhaltungen:
- DE-A- 19 548 984
- DE-C- 19 819 265
- US-A- 5 336 950

## Beschreibung

Die Erfindung betrifft eine Einrichtung zum Einstellen von Betriebsgrößen in mehreren programmierbaren integrierten Schaltungen. Weiterhin betrifft die Erfindung ein Verfahren zum Einstellen solcher Betriebsgrößen. Ferner betrifft die Erfindung eine programmierbare integrierte Schaltung, die ein derartiges Einstellen von Betriebsgrößen gestattet. Als diesbezüglicher Stand der Technik wird die Druckschrift US 5 336 950 genannt.

In der Produktbroschüre "HAL800 Programmable Linear Hall Effect Sensor", Micronas Intermetall, Edition August 24, 1998, ist eine programmierbare integrierte Schaltung beschrieben, bei der Betriebsgrößen, beispielsweise die Empfindlichkeit, das Filterverhalten, die Klemmspannung, die Temperaturcharakteristik und weitere Größen, mithilfe einer externen Steuerung eingestellt werden können. Die von einem Hall-Sensor erfaßte Magnetfeldgröße wird in eine elektrische Spannung gewandelt und am Analogausgang abgegeben. Mithilfe der Einstellung der Betriebsgrößen kann die integrierte Schaltung mit dem Hallgenerator an unterschiedliche Umgebungsbedingungen intelligent angepaßt werden. Das Einstellen von Betriebsgrößen wird auch als Parametriervorgang bezeichnet.

Herkömmlicherweise wird zum Einstellen von Betriebsgrößen in der integrierten Schaltung eine externe Abgleichsteuerung verwendet, die durch einen Mikroprozessor gesteuert wird. Diese Abgleichsteuerung überträgt an die integrierte Schaltung einen digitalen Datenstrom, der von der internen Steuerung in der integrierten Schaltung ausgewertet wird. Bei zahlreichen Anwendungen, beispielsweise in der Autoindustrie, sind an einem einzigen Anwendungsobjekt, beispielsweise an einem Kraftfahrzeugmotor, mehrere programmierbare integrierte Schattungen desselben Typs vorzusehen. Bei einer anderen Anwendung, beispielsweise im Prüffeld, ist gleichzeitig eine Vielzahl von gleichartigen programmierbaren integrierten Schaltungen zu testen. In diesen Fällen muß beim Stand der Technik jede programmierbare integrierte Schaltung einzeln mit der Abgleichsteuerung verbunden werden, und an jede integrierte Schaltung ist der digitale Datenstrom einzeln zu übertragen. Diese Vorgehensweise ist umständlich und unübersichtlich, da eine Vielzahl von Leitungswegen geschaltet werden müssen. Außerdem ist der technische Aufwand erhöht.

Es ist Aufgabe der Erfindung, eine Einrichtung anzugeben, die auf einfache Weise das Einstellen von Betriebsgrößen in mehreren integrierten Schaltungen ermöglicht. Weiterhin soll ein Verfahren zum einfachen Einstellen von Betriebsgrößen in mehreren integrierten Schaltungen angegeben werden. Ferner soll eine programmierbare integrierte Schaltung angegeben werden, mit der die genannte Einrichtung betrieben und das Verfahren durchgeführt werden kann.

Diese Aufgabe wird für eine Einrichtung durch die Merkmale des Anspruchs 1 gelöst. Vorteilhafte Weiterbildungen sind in den abhängigen Ansprüchen angegeben.

Gemäß der Erfindung werden die Eingänge mehrerer integrierter Schaltungen miteinander verbunden. Ein jeder Ausgang wird getrennt zu der externen Steuereinheit geführt. Durch Ausgabe eines Sperr-Steuerbefehls werden sämtliche integrierten Schaltungen in einen Zustand versetzt, in welchem sie die über die Eingänge ankommenden Steuerbefehle ignorieren. Gleichzeitig werden sämtliche Ausgänge der integrierten Schaltungen inaktiv geschaltet, d.h. diese Ausgänge geben keine analogen und digitalen Signale ab, die den Zustand der integrierten Schaltung beschreiben. Vielmehr können nunmehr an jedem Ausgang anliegende Steuersignale empfangen und von der jeweiligen internen Steuerung ausgewertet werden. Die externe Steuereinheit wählt eine der integrierten Schaltungen aus und führt über deren Ausgang ein Freigabe-Steuersignal zu. Die interne Steuerung erkennt dieses Freigabe-Steuersignal und hebt die Verriegelung auf. Der an sämtliche integrierten Schaltungen danach ausgesendete digitale Datenstrom zum Einstellen der Betriebsgrößen wird nunmehr nur von der ausgewählten und aktiv geschalteten integrierten Schaltung ausgewertet, d.h. deren Betriebsgrößen werden eingestellt. Alle anderen integrierten Schaltungen befinden sich in weiterhin im verriegeltem Zustand, d.h. sie können den digitalen Datenstrom nicht auswerten. Auf diese Weise kann nach und nach jede integrierte Schaltung von der externen Steuerung ausgewählt und die jeweilige integrierte Schaltung in ihren Betriebsgrößen eingestellt werden. Durch die Erfindung ist es möglich, in einer übersichtlichen Anordnung das Einstellen von Betriebsgrößen bei einer Vielzahl von integrierten Schaltungen auf einfache und übersichtliche Weise vorzunehmen, wobei der Leitungsaufwand für elektrische Verbindungen gering ist.

Bei einem bevorzugten Ausführungsbeispiel hat jede integrierte Schaltung nur einen Masseanschluß, einen Eingangsanschluß und einen Ausgangsanschluß, wobei die Versorgungsspannung über den Eingangsanschluß zugeführt wird. Jede programmierbare integrierte Schaltung hat also nur drei Anschlüsse, wodurch der Leitungsaufwand weiter verringert wird. Da der Ausgangsanschluß eine Doppelfunktion hat, nämlich erstens die Ausgabe von analogen und digitalen Signalen, die den Arbeitszustand der integrierten Schaltung beschreiben, und zweitens die Funktion eines Eingangs, über den das Freigabe-Steuersignal zugeführt wird, muß die Gesamtzahl der Anschlüsse nicht erhöht werden, wobei dennoch eine Demultiplexerfunktion erfüllt wird.

Gemäß einem weiteren Aspekt der Erfindung wird ein Verfahren zum Einstellen von Betriebsgrößen in mehreren programmierbaren integrierten Schaltungen gemäß Anspruch 10 angegeben. Dieses Verfahren arbeitet zuverlässig, ist übersichtlich und kann auf einfache Weise durchgeführt werden.

Ein zusätzlicher Aspekt der Erfindung betrifft den Aufbau einer progammierbaren integrierten Schaltung gemäß Anspruch 11. Diese integrierte Schaltung eignet sich für die Einrichtung und die Durchführung des genannten Verfahrens. Aufgrund der erwähnten Doppelfunktion des Ausgangs ist die Anzahl der notwendigen Anschlüsse gering, obwohl eine Demultiplexerfunktion realisiert werden kann.

Ein Ausführungsbeispiel der Erfindung wird im folgenden anhand der Zeichnung erläutert. Darin zeigt:
- Figur 1: den Aufbau einer programmierbaren integrierten Schaltung, und
- Figur 2: eine Anordnung mehrerer gleichartiger integrierter Schaltungen, bei denen die Einstellung von Betriebsgrößen unter Nutzung der Erfindung erfolgt.

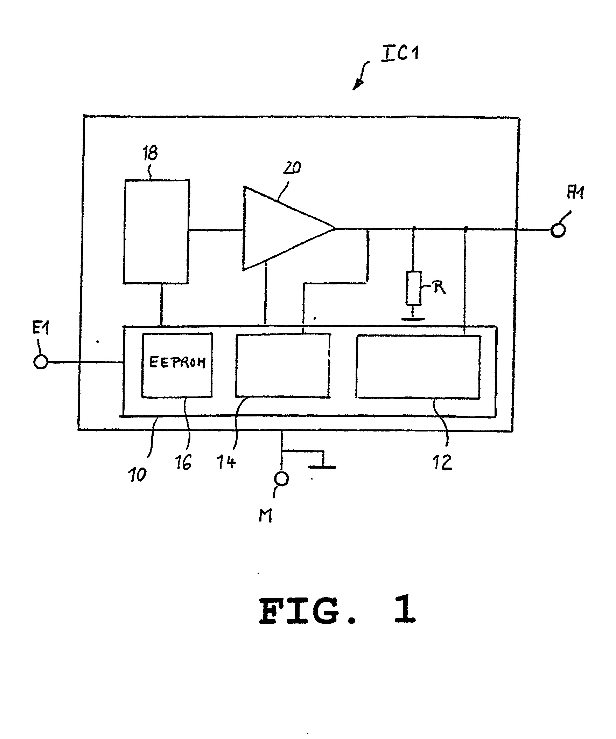

Figur 1 zeigt den Aufbau einer integrierten Schaltung IC1, die als programmierbarer linearer Halleffekt-Sensor arbeitet. Die integrierte Schaltung IC1 hat einen Masseanschluß M, der mit dem metallischen Gehäuse verbunden ist, einen Eingangsanschluß E1 und einen Ausgangsanschluß A1. Die integrierte Schaltung IC1 enthält eine interne Steuerung 10, die neben weiteren Steuerteilen, die z.B. die digitale Prozeßsignalverarbeitung betreffen, eine Auswerteschaltung 12 und einen Digitalbaustein 14 hat. Ferner gehört zur Steuerung 10 ein EEPROM-Baustein 16, in welchem digitale Daten gespeichert werden.

Als Sensor enthält die integrierte Schaltung IC1 einen Hallgenerator 18, dessen Ausgangssignal von einem programmierbaren Analogverstärker 20 verstärkt wird. Der Ausgang des Verstärkers 20 ist zum Ausgang A1 und über einen Widerstand R gegen Masse geführt. Die integrierte Schaltung IC1 kann beispielsweise zur Winkel- oder Wegmessung verwendet werden, wenn sie in Kombination mit einem rotierenden oder sich linear bewegenden Magneten verwendet wird.

Die technischen Eigenschaften der integrierten Schaltung IC1 können vom Kunden individuell eingestellt werden. Beispielsweise ist es möglich, die Temperaturcharakteristik, den Ausgangsspannungsbereich, die Empfindlichkeit bei der Anwendung in einer bestimmten Betriebsumgebung etc. einzustellen. Hierzu werden über den Eingang E1, über den auch die normale Betriebsspannung zugeführt wird, digitale Steuerbefehle zugeführt. Diese digitalen Steuerbefehle liegen in Form einer Betriebsspannungsmodulation vor, wobei die Spannungswerte zur Definition der Binärzustände größer als die Versorgungsspannung sind. Die digitalen Befehle werden von der internen Steuerung 10 ausgewertet, wobei Daten in den EEPROM-Baustein 16 eingeschrieben werden. Mithilfe dieser Daten im EEPROM-Baustein 16 werden beim Arbeitsbetrieb der integrierten Schaltung IC1 ihre technischen Merkmale festgelegt. Während der Programmierung der integrierten Schaltung IC1 gibt der Digitalbaustein 14 am Ausgang A1 Protokollsignale ab, welche eine externe Steuerung auswertet und dabei die Funktionstüchtigkeit der integrierten Schaltung IC1 überprüft. Die Programmierung der integrierten Schaltung IC1 wird durch Ausgabe eines ENDE-Befehls abgeschlossen. Nach Erhalt dieses ENDE-Befehls veranlaßt die interne Steuerung 10 das nicht flüchtige Einspeichern der Daten im EEPROM-Baustein 16 und schaltet den Ausgang des Verstärkers 20 aktiv, so daß am Ausgang A1 eine analoge Spannung entsprechend der vom Hallgenerator 18 erfaßten Magnetfeldgröße ansteht.

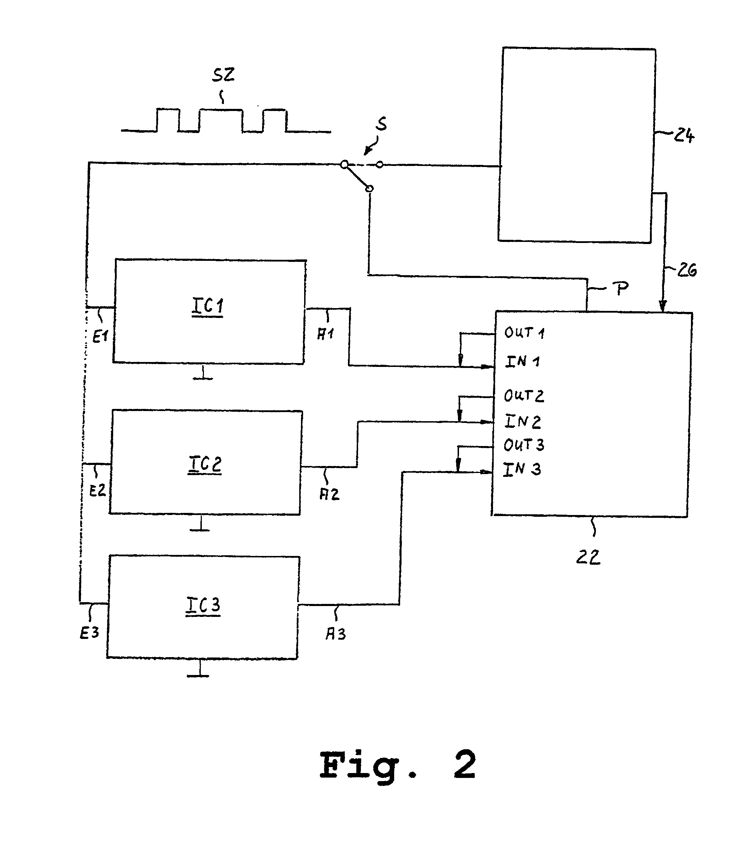

Die interne Steuerung 10 ist so aufgebaut, daß sie bei Erhalt eines Sperr-Steuerbefehls am Eingang E1 sowohl den Verstärker 20 als auch den Digitalbaustein 14 inaktiv schaltet. Weiterhin werden die am Eingang E1 ankommenden Steuerbefehle von der internen Steuerung nicht mehr ausgewertet, d.h. eine Programmierung der integrierten Schaltung IC1 ist nicht mehr möglich. Die Auswerteschaltung 12 bleibt jedoch aktiv und erfaßt Spannungszustände am Ausgang A1. Der Ausgang A1 wirkt nun so wie ein Eingang. Wenn an diesen Ausgang A1 ein Freigabe-Steuersignal, beispielsweise ein vorbestimmter Spannungspegel, angelegt ist, so erkennt die Auswerteschaltung 12 dieses Freigabe-Steuersignal. Die interne Steuerung 10 wird nach Erhalt dieses Freigabe-Steuersignals aktiv geschaltet, und die am Eingang E1 ankommenden Steuersignale werden ausgewertet. In diesem Zustand ist eine Programmierung der integrierten Schaltung IC1 möglich. Figur 2 zeigt eine Einrichtung zum Einstellen von Betriebsgrößen in drei programmierbaren integrierten Schaltungen IC1, IC2 und IC3. Die integrierten Schaltungen IC2 und IC3 haben denselben bereits beschriebenen Aufbau wie die integrierte Schaltung IC1 nach Figur 1. Die Eingänge sind mit E1, E2, E3 und die Ausgänge mit A1, A2, A3 bezeichnet. Die Ausgänge A1, A2, A3 sind mit Eingängen IN1, IN2, IN3 einer externen Steuerung 22 verbunden, die einen Mikroprozessor enthält. Auf diese Ausgänge A1, A2, A3 wirken auch Ausgänge OUT1, OUT2, OUT3 der Steuerung 22. Die Eingänge und Ausgänge der Steuerung 22 sind durch Tristate-Bausteine realisiert, die je nach Schaltzustand Signale empfangen oder aussenden.

Die externe Steuerung 22 sendet an ihrem Protokollausgang P digitale Steuerbefehle in Form einer Spannungsmodulation aus, wie dies anhand eines Signalzuges SZ verdeutlicht ist. Die Spannung zur Definition der Binärzustände in dem Signalzug SZ ist größer als die übliche Versorgungsspannung, welche den zusammengeschlossenen Eingängen E1, E2, E3 zugeführt wird. Zur Modulation wird üblicherweise das Zweifrequenzverfahren verwendet, bei der ein erster Binärzustand (z.B. der Binärzustand "1") durch einen zusätzlichen Signalwechsel innerhalb einer definierten Breite eines Zeitfensters auftritt. Fehlt dieser Signalwechsel, so liegt der andere Binärzustand (z.B. der Binärzustand "0") an.

Im folgenden wird der Ablauf zur Einstellung von Betriebsgrößen in den integrierten Schaltungen IC1, IC2, IC3 erläutert. Zunächst gibt die externe Steuerung 22 Steuerbefehle aus, welche über die gemeinsam verbundenen Eingänge E1, E2, E3 den integrierten Schaltungen IC1, IC2, IC3 zugeführt werden. Diese Steuerbefehle enthalten einen Sperr-Befehl, durch den die jeweilige interne Steuerung der integrierten Schaltungen IC1, IC2, IC3 einen Verriegelungszustand einstellt, bei dem die im Signalzug SZ enthaltenen Steuerbefehle nicht weiter ausgewertet werden und die Ausgänge A1, A2, A3 jeweils in einen inaktiven Zustand versetzt werden, in welchem an den Ausgängen A1, A2, A3 anliegende Signale erkannt werden können. Die externe Steuerung wählt nun eine der integrierten Schaltungen, z.B. die integrierte Schaltung IC1, aus und legt an den Ausgang A1 einen Spannungspegel an, der als Freigabe-Steuersignal von der Auswerteschaltung 12 erkannt wird. Daraufhin schaltet die interne Steuerung 10 der integrierten Schaltung IC1 den aktiven Zustand ein, in welchem die an ihrem Eingang E1 ankommenden Steuerbefehle ausgewertet werden. Die externe Steuerung 22 sendet nun über ihren Protokollausgang P Programmierbefehle aus, mit denen die Betriebsgrößen in der integrierten Schaltung IC1 eingestellt werden. Der Digitalbaustein 14 gibt über den Ausgang A1 ein digitales Protokoll aus, das von der externen Steuerung 22 über den Eingang IN1 eingelesen wird. Mithilfe dieses digitalen Protokolls wird überprüft, ob die integrierte Schaltung IC1 ordnungsgemäß programmiert worden ist und einwandfrei funktioniert. Zum Abschluß der Programmierung wird über den Protokollausgang P ein ENDE-Signal ausgesandt, woraufhin die interne Steuerung 10 den Ausgang A1 aktiv schaltet, der ein analoges Spannungssignal entsprechend dem Arbeitszustand des Hallgenerators 18 abgibt. Die im EEPROM-Baustein 16 gespeicherten Daten werden versiegelt und der Programmiervorgang ist beendet. Anschließend geht die externe Steuerung 22 in analoger Weise wie bei der integrierten Schaltung C1 auch für die weiteren integrierten Schaltungen IC2 und IC3 vor und stellt dort die entsprechenden Betriebsgrößen ein. Nach dem beschriebenen Prinzip kann auch eine größere Anzahl von integrierten Schaltungen programmiert werden.

Alternativ kann auch eine Abgleichsteuerung 24 eingesetzt werden, die die entsprechenden Steuersignale erzeugt, wobei ein Schalter S in die gestrichelt eingezeichnete Position geschaltet ist. Die Abgleichsteuerung 24 übergibt über die Leitung 26 an die Steuerung 22 die Adresse der zu programmierenden integrierten Schaltung IC1, IC2 oder IC3. Die Steuerung 22 gibt über ihre Ausgänge OUT1, OUT2, OUT3 das entsprechende Freigabe-Steuersignal an die adressierte integrierte Schaltung ab.

### Bezugszeichenliste

- 10: interne Steuerung
- 12: Auswerteschaltung
- 14: Digitalbaustein
- 16: EEPROM-Baustein
- 18: Hallgenerator
- 20: Verstärker
- 22: externe Steuerung
- 24: Abgleichsteuerung
- 26: Leitung
- IC1, IC2, IC3,: integrierte Schaltung
- E1, E2, E3,: Eingangsanschluß
- A1, A2, A3,: Ausgang
- R: Widerstand
- M: Masse
- OUT1, OUT2, OUT3,: Ausgänge der externen Steuerung
- IN1, IN2, IN3: Eingänge der externen Steuerung
- S: Schalter
- SZ: Signalzug
- P: Protokollausgang

## Patentansprüche

1. Einrichtung zum Einstellen von Betriebsgrößen in mehreren programmierbaren integrierten Schaltungen (IC1, IC2, IC3),
bei der jede integrierte Schaltung (IC1, IC2, IC3) einen Masseanschluß (M), an dem Massepotential anliegt, einen Eingang (E1, E2, E3), über den von einer internen Steuerung (10) auszuwertende digitale Steuerbefehle zugeführt werden, und einen Ausgang (A1, A2, A3) hat, über den Steuerinformationen über den Zustand der integrierten Schaltung (IC1, IC2, IC3) ausgegeben werden,
die Eingänge (E1, E2, E3) mehrerer integrierter Schaltungen (IC1, IC2, IC3) miteinander verbunden werden,
jeder Ausgang (A1, A2, A3) getrennt zu einer externen Steuereinheit (22) geführt ist,
nach Erhalt eines Sperr-Steuerbefehls jede integrierte Schaltung ((C1, IC2, IC3) das Auswerten empfangener Steuerbefehle verriegelt und ihren Ausgang (A1, A2, A3) in einen Zustand versetzt, in welchem Steuersignale empfangen und ausgewertet werden können,
die externe Steuereinheit (22) an eine ausgewählte integrierte Schaltung (IC1) über deren Ausgang (A1) ein Freigabe-Steuersignal zuführt, woraufhin die interne Steuerung (10) die Verriegelung aufhebt,
und bei der anschließend Steuerbefehle zum Einstellen der Betriebsgrößen an die Eingänge (E1, E2, E3) der integrierten Schaltungen (IC1, IC2, IC3) ausgegeben werden.

2. Einrichtung nach Anspruch 1, **dadurch gekennzeichnet, daß** die interne Steuerung (10) einer jeden integrierten Schaltung (IC1) eine mit dem Ausgang (A1) verbundene Auswerteschaltung (12) enthält, die das ankommende Freigabe-Steuersignal detektiert.

3. Einrichtung nach einem der vorhergehenden Ansprüche, **dadurch gekennzeichnet, daß** nach dem Übertragen der Steuerbefehle zum Einstellen der Betriebsgrößen ein ENDE-Steuerbefehl ausgegeben wird.

4. Einrichtung nach einem der vorhergehenden Ansprüche, **dadurch gekennzeichnet, daß** jede programmierbare monolitische integrierte Schaltung (IC1) einen Hallgenerator (18) zur Erfassung von Magnetfeldgrößen enthält.

5. Einrichtung nach einem der vorhergehenden Ansprüche, **dadurch gekennzeichnet, daß** jede interne Steuerung (10) einen Digitalbaustein (14) enthält, der über den Ausgang (A1) Protokollsignale an die externe Steuerung (22) ausgibt.

6. Verfahren zum Einstellen von Betriebsgrößen in mehreren programmierbaren integrierten Schaltungen (IC1, IC2, IC3),
bei dem jede integrierte Schaltung (IC1, IC2, IC3) einen Masseanschluß (M), an dem Massepotential anliegt, einen Eingang (E1, E2, E3), über den von einer internen Steuerung (10) auszuwertende digitale Steuerbefehle zugeführt werden, und einen Ausgang (A1, A2, A3) hat, über den Steuerinformationen über den Zustand der integrierten Schaltung (IC1, IC2, IC3) ausgegeben werden,
die Eingänge (E1, E2, E3) mehrerer integrierter Schaltungen (IC1, IC2, IC3) miteinander verbunden werden,
jeder Ausgang (A1, A2, A3) getrennt zu einer externen Steuereinheit (22) geführt wird,
nach Erhalt eines Sperr-Steuerbefehls jede integrierte Schaltung (IC1, IC2, IC3) das Auswerten empfangener Steuerbefehle verriegelt und ihren Ausgang in einen Zustand versetzt, in welchem Steuersignale empfangen und ausgewertet werden können,
die externe Steuereinheit (32) an eine ausgewählte integrierte Schaltung (IC1) über deren Ausgang (A1) ein Freigabe-Steuersignal zuführt, woraufhin die interne Steuerung (10) die Verriegelung aufhebt,
und bei der anschließend Steuerbefehle zum Einstellen der Betriebsgrößen an die Eingänge (E1, E2, E3) der integrierten Schaltungen (IC1, IC2, IC3) ausgegeben werden.

7. Programmierbare integrierte Schaltung (IC1),
mit einem Masseanschluß (M), einem Eingang (E1), über den von einer internen Steuerung (10) auszuwertende digitale Steuerbefehle zugeführt werden, und mit einem Ausgang (A1), über den Steuerinformationen über den Zustand der integrierten Schaltung (IC1) ausgegeben werden,
**dadurch gekennzeichnet, daß** die Steuerung (10)
nach Erhalt eines Sperr-Steuerbefehls das Auswerten empfangener Steuerbefehle verriegelt,
daß der Ausgang (A1) in einen Zustand versetzt wird, in welchem Steuersignale empfangen und ausgewertet werden können,
daß die interne Steuerung (10) bei Zuführung eines Freigabe-Steuersignal am Ausgang (A1) die Verriegelung aufhebt,
und daß in diesem Zustand am Eingang ankommende Steuerbefehle das Einstellen der Betriebsgrößen in der integrierten Schaltung (IC1) veranlassen.

8. Integrierte Schaltung nach einem der vorhergehenden Ansprüche, **dadurch gekennzeichnet, daß** die interne Steuerung (10) eine mit dem Ausgang (A1) verbundene Auswerteschaltung (12) enthält, die das ankommende Freigabe-Steuersignal detektiert

9. Integrierte Schaltung nach einem der vorhergehenden Ansprüche, **dadurch gekennzeichnet, daß** nach dem Übertragen der Steuerbefehle zum Einstellen der Betriebsgrößen ein empfangener ENDE-Steuerbefehl veranlaßt, daß das Auswerten empfangener Steuerbefehle verriegelt wird.

10. Integrierte Schaltung nach einem der vorhergehenden Ansprüche, **dadurch gekennzeichnet, daß** sie einen Hallgenerator (18) zur Erfassung von Magnetfeldgrößen enthält.

11. Integrierte Schaltung nach einem der vorhergehenden Ansprüche, **dadurch gekennzeichnet, daß** die interne Steuerung (10) einen Digitalbaustein (14) enthält, der über den Ausgang (A1) Protokollsignale an eine externe Steuerung (22) ausgibt.

## Claims

1. A device for setting operating parameters in a plurality of programmable integrated circuits (IC1, IC2, IC3),
in which each integrated circuit (IC1, IC2, IC3) has a ground terminal (M), to which ground potential is applied, an input (E1, E2, E3), via which digital control commands to be evaluated by an internal controller (10) are supplied, and an output (A1, A2, A3), via which pieces of control information on the state of the integrated circuit (IC1, IC2, IC3) are output,
the inputs (E1, E2, E3) of a plurality of integrated circuits (IC1, IC2, IC3) are connected to one another,
each output (A1, A2, A3) is led separately to an external control unit (22),
after the reception of an inhibiting control command, each integrated circuit (IC1, IC2, IC3) interlocks the evaluation of received control commands and puts its output (A1, A2, A3) into a state in which control signals can be received and evaluated,
the external control unit (22) feeds an enable control signal to a selected integrated circuit (IC1) via the output (A1) thereof, whereupon the internal controller (10) deactivates the interlocking,
and in which control commands for setting the operating parameters are subsequently output to the inputs (E1, E2, E3) of the integrated circuits (IC1, IC2, IC3).

2. The device according to claim 1, **characterized in that** the internal controller (10) of each integrated circuit (IC1) contains an evaluation circuit (12) which is connected to the output (A1) and detects the incoming enable control signal.

3. The device according to one of the preceding claims, **characterized in that** an END control command is output after the transmission of the control commands for setting the operating parameters.

4. The device according to one of the preceding claims, **characterized in that** each programmable monolithic integrated circuit (IC1) contains a Hall generator (18) for detecting magnetic field parameters.

5. The device according to one of the preceding claims, **characterized in that** each internal controller (10) contains a digital module (14), which outputs protocol signals to the external controller (22) via the output (A1).

6. A method for setting operating parameters in a plurality of programmable integrated circuits (IC1, IC2, IC3),
in which each integrated circuit (IC1, IC2, IC3) has a ground terminal (M), to which ground potential is applied, an input (E1, E2, E3), via which digital control commands to be evaluated by an internal controller (10) are supplied, and an output (A1, A2, A3), via which pieces of control information on the state of the integrated circuit (IC1, IC2, IC3) are output,
the inputs (E1, E2, E3) of a plurality of integrated circuits (IC1, IC2, IC3) are connected to one another,
each output (A1, A2, A3) is led separately to an external control unit (22),
after the reception of an inhibiting control command, each integrated circuit (IC1, IC2, IC3) interlocks the evaluation of received control commands and puts its output (A1, A2, A3) into a state in which control signals can be received and evaluated,
the external control unit (32) feeds an enable control signal to a selected integrated circuit (IC1) via the output (A1) thereof, whereupon the **internal** controller (10) deactivates the interlocking, and in which control commands for setting the operating parameters are subsequently output to the inputs (E1, E2, E3) of the integrated circuits (IC1, IC2, IC3).

7. A programmable integrated circuit (IC1),
having a ground terminal (M), an input (E1), via which digital control commands to be evaluated by an internal controller (10) are fed, and having an output (A1), via which pieces of control information on the state of the integrated circuit (IC1) are output,
**characterized in that** the controller (10)
after the reception of an inhibiting control command, interlocks the evaluation of received control commands,
**in that** the output (A1) is put into a state in which control signals can be received and evaluated,
**in that** the internal controller (10) deactivates the interlocking when an enable control signal is fed in at the output (A1),
and **in that** control commands arriving at the input in this state initiate the setting of the operating parameters in the integrated circuit (IC1).

8. The integrated circuit according to claim 7, **characterized in that** the internal controller (10) contains an evaluation circuit (12), which is connected to the output (A1) and detects the incoming enable control signal.

9. The integrated circuit according to one of the preceding claims, **characterized in that** after the transmission of the control commands for setting the operating parameters a received END control command initiates that the evaluation of received control commands is interlocked.

10. The integrated circuit according to one of the preceding claims, **characterized in that** it contains a Hall generator (18) for detecting magnetic field parameters.

11. The integrated circuit according to one of the preceding claims, **characterized in that** the internal controller (10) contains a digital module (14), which outputs protocol signals to an external controller (22) via the output (A1).

## Revendications

1. Appareil pour régler des grandeurs de fonctionnement dans plusieurs circuits intégrés programmables (IC1, IC2, IC3), dans lequel :
- chaque circuit intégré (IC1, IC2, IC3) possède une borne de masse (M) à laquelle est appliqué un potentiel de masse, une entrée (E1, E2, E3) par laquelle sont amenées des instructions de commande numériques que doit exploiter un dispositif de commande interne (10), et une sortie (A1, A2, A3) par laquelle sont délivrées des informations de commande relatives à l'état du circuit intégré (IC1, IC2, IC3),
- les entrées (E1, E2, E3) de plusieurs circuits intégrés (IC1, IC2, IC3) sont reliées entre elles,
- chaque sortie (A1, A2, A3) est amenée séparément à une unité de commande externe (22),
- après réception d'une instruction de commande d'arrêt, chaque circuit intégré (IC1, IC2, IC3) verrouille l'exploitation des instructions de commande reçus et place sa sortie (A1, A2, A3) dans un état dans lequel des signaux de commande peuvent être reçus et exploités,
- l'unité de commande externe (22) amène un signal de commande de déverrouillage à un circuit intégré choisi (IC1) via sa sortie (A1), après quoi le dispositif de commande interne (10) effectue le déverrouillage,
- et dans lequel ensuite des instructions de commande pour régler les grandeurs de fonctionnement sont délivrées aux entrées (E1, E2, E3) des circuits intégrés (IC1, IC2, IC3).

2. Appareil selon la revendication 1, **caractérisé en ce que** le dispositif de commande interne (10) de chaque circuit intégré (IC1) contient un circuit d'exploitation (12), relié à la sortie (A1), qui détecte le signal de commande de déverrouillage.

3. Appareil selon l'une des revendications précédentes, **caractérisé en ce qu'**une instruction de commande de FIN est délivrée après le transfert des instructions de commande pour régler les grandeurs de fonctionnement.

4. Appareil selon l'une des revendications précédentes, **caractérisé en ce que** chaque circuit intégré monolithique programmable (IC1) contient un générateur à effet Hall (18) pour détecter des grandeurs de champ magnétique.

5. Appareil selon l'une des revendications précédentes, **caractérisé en ce que** chaque dispositif de commande interne (10) contient un élément numérique (14) qui délivre par sa sortie (A1) des signaux de protocole au dispositif de commande externe (22).

6. Procédé pour régler des grandeurs de fonctionnement dans plusieurs circuits intégrés programmables (IC1, IC2, IC3), dans lequel :
- chaque circuit intégré (IC1, IC2, IC3) possède une borne de masse (M) à laquelle est appliqué un potentiel de masse, une entrée (E1, E2, E3) par laquelle sont amenées des instructions de commande numériques que doit exploiter un dispositif de commande interne (10), et une sortie (A1, A2, A3) par laquelle sont délivrées des informations de commande relatives à l'état du circuit intégré (IC1, IC2, IC3),
- les entrées (E1, E2, E3) de plusieurs circuits intégrés (IC1, IC2, IC3) sont reliées entre elles,
- chaque sortie (A1, A2, A3) est amenée séparément à une unité de commande externe (22),
- après réception d'une instruction de commande d'arrêt, chaque circuit intégré (IC1, IC2, IC3) verrouille l'exploitation des instructions de commande reçus et place sa sortie (A1, A2, A3) dans un état dans lequel des signaux de commande peuvent être reçus et exploités,
- l'unité de commande externe (22) amène une signal de commande de déverrouillage à un circuit intégré choisi (IC1) via sa sortie (A1), après quoi le dispositif de commande interne (10) effectue le déverrouillage,
- et dans lequel ensuite des instructions de commande pour régler les grandeurs de fonctionnement sont délivrées aux entrées (E1, E2, E3) des circuits intégrés (IC1, IC2, IC3).

7. Circuit intégré programmable (IC1), comportant une borne de masse (M), une entrée (E1) par laquelle sont amenées des instructions de commande numériques que doit exploiter un dispositif de commande interne (10), et une sortie (A1) par laquelle sont délivrées des informations de commande relatives à l'état du circuit intégré (IC1),
**caractérisé en ce que** :
- le dispositif de commande (10) verrouille l'exploitation des instructions de commande reçues après réception d'une instruction de commande d'arrêt,
- la sortie (A1) est placée dans un état dans lequel des signaux de commande peuvent être reçus et exploités,
- le dispositif de commande interne (10) effectue le déverrouillage lorsqu'un signal de commande de déverrouillage est amené à la sortie (A1),
- et **en ce que** des instructions de commande arrivant dans cet état à l'entrée ordonnent le réglage des grandeurs de fonctionnement dans le circuit intégré (IC1).

8. Circuit intégré selon la revendication 7, **caractérisé en ce que** le dispositif de commande interne (10) contient un circuit d'exploitation (12) relié à la sortie (A1), qui détecte le signal de commande de déverrouillage arrivant.

9. Circuit intégré selon l'une des revendications précédentes, **caractérisé en ce qu'**une instruction de commande de FIN reçue ordonne de verrouiller l'exploitation des instructions de commande reçues après le transfert des instructions de commande pour régler les grandeurs de fonctionnement.

10. Circuit intégré selon l'une des revendications précédentes, **caractérisé en qu**'il contient un générateur à effet Hall (18) pour détecter des grandeurs de champ magnétique.

11. Circuit intégré selon l'une des revendications précédentes, **caractérisé en ce que** le dispositif de commande interne (10) contient un élément numérique (14) qui délivre par la sortie (A1) des signaux de protocole à un dispositif de commande externe (22).
